# EUROPÄISCHE PATENTSCHRIFT

(11) **EP 1 493 989 B1**
(45) Veröffentlichungstag und Bekanntmachung des Hinweises auf die Patenterteilung: **15.08.2007**
(21) Anmeldenummer: 04013226.8
(22) Anmeldetag: 04.06.2004
(51) Int. Cl.: G01B 11/00

(54) **Abtastbaueinheit einer Positionsmesseinrichtung**
Scanning unit for a position measuring device
Unité de balayage pour un dispositif de mesure de position

(30) Priorität: 30.06.2003 DE 10329374
(43) Veröffentlichungstag der Anmeldung: 05.01.2005
(73) Patentinhaber: Dr. Johannes Heidenhain GmbH, 83292 Traunreut (DE)
(72) Erfinder: Falkinger, Bernhard, 83365 Nussdorf (DE); Gschossmann, Horst, 84577 Tüssling (DE); Tondorf, Sebastian, 83329 Waging am See (DE)

(56) Entgegenhaltungen:
- US-A- 3 816 002
- US-A- 4 593 194

## Beschreibung

Die Erfindung betrifft eine Abtastbaueinheit einer Positionsmesseinrichtung nach dem Oberbegriff des Anspruches 1.

In der US 4,593,194 ist eine gattungsgemäße Abtastbaueinheit zur lichtelektrischen Abtastung eines Maßstabes beschrieben. Die Abtastbaueinheit besteht aus einem Halter, an dem eine Lichtquelle, eine Linse, eine Abtastplatte sowie ein Detektorarray zueinander ausgerichtet befestigt sind. Ein derartiger Halter ist relativ einfach herstellbar und die an ihm angebrachten Bauelemente automatisiert befestigbar.

Zur korrekten Abtastung des Maßstabs ist es erforderlich, dass der Abtastabstand der Abtastplatte gegenüber dem Maßstab abhängig von den Gitterparametern exakt eingestellt wird. Zusätzlich ist es erforderlich, dass die Winkellage des Abtastgitters der Abtastplatte entsprechend den Anforderungen passend zu den Teilstrichen des Maßstabgitters eingestellt wird.

Hierzu ist gemäß der US 4,593,194 der Halter mit einem rohrförmigen Verlängerungsstück versehen, das auf einen zylindrischen Zapfen als Träger aufgesteckt ist. Der Halter ist an dem Zapfen verschiebbar, wodurch der Abtastabstand einstellbar ist und darüber hinaus ist der Halter um den Zapfen in einer horizontalen Ebene drehbar, wodurch die Einstellung des Moiré-Winkels ermöglicht wird. Nach erfolgter Einstellung wird der Halter am Zapfen durch Klemmung festgelegt.

Nachteilig bei dieser Ausgestaltung ist, dass der Zapfen nur eine Verdrehung in der horizontalen Ebene zulässt, und dass darüber hinaus das Verlängerungsstück die Baugröße der Abtastbaueinheit vergrößert.

In der EP 0 548 848 A1 ist in den Figuren 13A und 13C eine Abtastbaueinheit einer Längenmesseinrichtung dargestellt, bei der eine Baugruppe umfassend eine Lichtquelle, eine Linse sowie ein Gitter in einer Ausnehmung eines Trägers relativ zu weiteren Bauteilen der Abtastbaueinheit frei justierbar ist. Nach erfolgter Justierung wird die Baugruppe am Träger durch Schrauben festgeklemmt und zusätzlich durch einen Klebstoff gesichert.

Die kraftschlüssige Festlegung durch Schrauben innerhalb der Ausnehmung ist aufwendig und führt in der Regel zu einer Dejustage. Die Klebespalte für den Klebstoff sind darüber hinaus relativ groß, was sich auf die Festigkeit und Langzeitstabilität nachteilig auswirkt.

Aufgabe der vorliegenden Erfindung ist es daher, eine Abtastbaueinheit zu schaffen, mit der eine miniaturisierte Bauform möglich wird und die eine flexible Justierung ermöglicht und bei der die Bauteile nach erfolgter Justierung dauerhaft stabil und einfach fixierbar sind.

Diese Aufgabe wird durch die Abtastbaueinheit mit den Merkmalen des Anspruches 1 gelöst.

Vorteilhafte Ausführungsformen sind in den abhängigen Ansprüchen angegeben.

Vorteile sowie Details der Erfindung sind in der nachfolgenden Beschreibung von Ausführungsbeispielen anhand der Figuren angegeben.
- Figur 1: eine Explosionsdarstellung einer Längenmesseinrichtung mit einer erfindungsgemäßen Abtastbaueinheit;
- Figur 2: die Längenmesseinrichtung gemäß Figur 1 im zusammengebauten Zustand im Längsschnitt;
- Figur 3: den Bereich der Abtastbaueinheit der Längenmesseinrichtung in Draufsicht;
- 'Figur 4: den Halter der Abtastbaueinheit im Längsschnitt vergrößert dargestellt;
- Figur 5: eine erste perspektivische Ansicht des Halters;
- Figur 6: eine zweite perspektivische Ansicht des Halters und
- Figur 7: eine Abtastplatte.

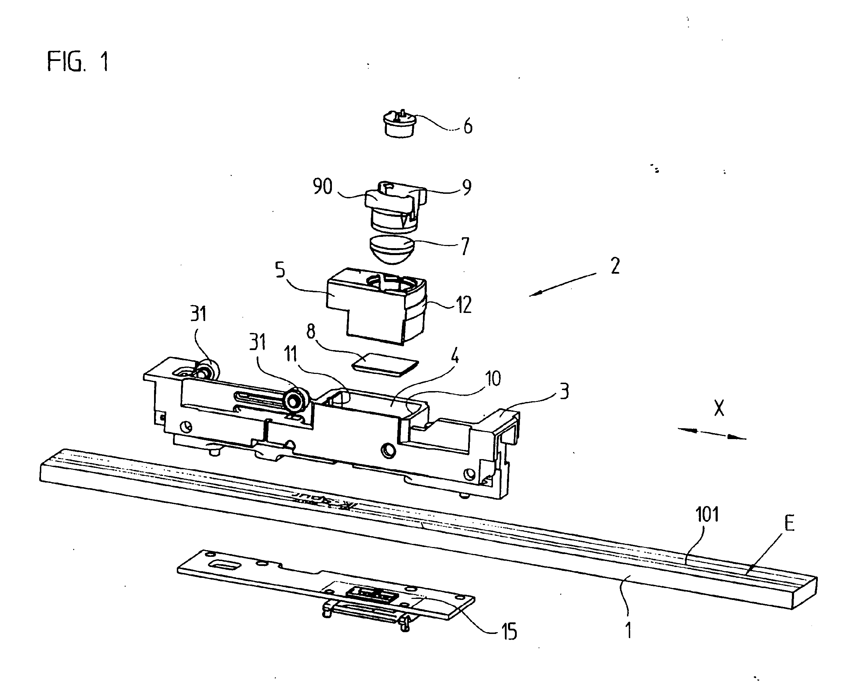

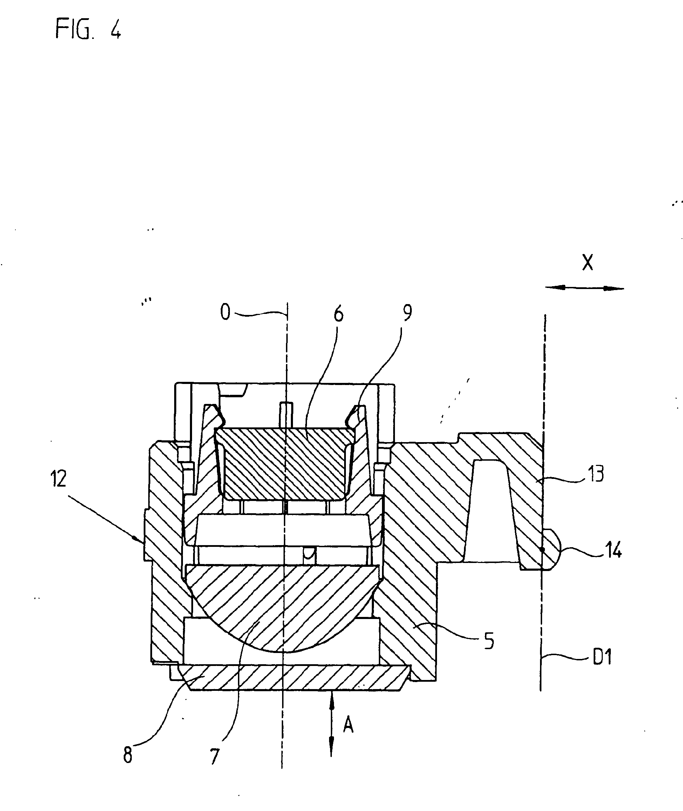

Ein Ausführungsbeispiel der Erfindung wird anhand der Figuren 1 bis 7 beschrieben. Die Erläuterung der Erfindung erfolgt anhand einer Längenmesseinrichtung, die Erfindung ist aber auch bei einer Winkelmesseinrichtung analog einsetzbar.

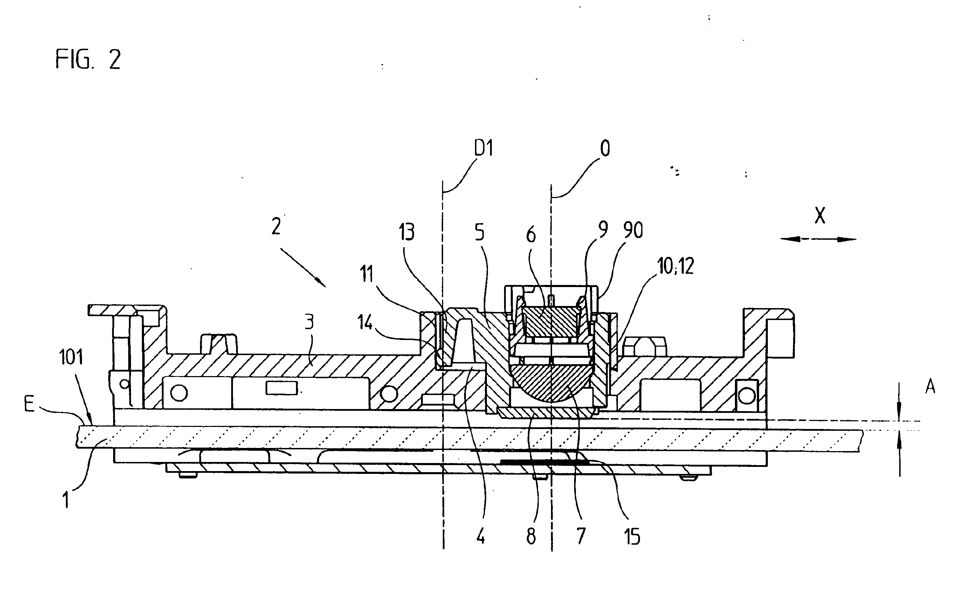

Figur 1 zeigt eine räumliche Explosionsdarstellung der erfindungsgemäß ausgestalteten Längenmesseinrichtung und Figur 2 zeigt diese Längenmesseinrichtung im zusammengebauten Zustand. Diese Längenmesseinrichtung umfasst einen linearen Maßstab 1 mit einer Messteilung 101 sowie eine zur Positionsmessung relativ zum Maßstab 1 in Messrichtung X verschiebbare Abtastbaueinheit 2. Bei der Relatiwerschiebung tastet die Abtastbaueinheit 2 den Maßstab 1 lichtelektrisch in bekannter Weise ab und erzeugt positionsabhängige elektrische Abtastsignale zur Positionierung zweier zueinander verschiebbarer Bauteile, wobei die Bauteile, an denen die Längenmesseinrichtung angebaut ist, beliebiger Art sein können, es können beispielsweise Bauteile einer Werkzeugmaschine, eines Elektromotors oder eines lithografischen Apparates sein. Dabei kann die Messteilung 101 ein inkrementales oder ein ein- oder mehrspuriges absolut codiertes Muster sein.

Zur exakten Positionsmessung ist es erforderlich, dass die Abtastbaueinheit 2 die Messteilung 101 des Maßstabs 1 in einem festgelegten konstanten Abtastabstand A abtastet. Um dies zu gewährleisten ist die Abtastbaueinheit 2 über Gleitelemente oder Rollelemente 31 in bekannter Weise am Maßstab 1 selbst oder auf einem Träger des Maßstabs 1 exakt parallel zum Maßstab 1 in Messrichtung X geführt.

Die Abtasteinheit 2 besteht aus einem Träger 3 mit einer Ausnehmung 4 zur justierbaren Aufnahme eines Halters 5. An dem Halter 5 sind zueinander ausgerichtet montiert eine Lichtquelle 6, eine Linse 7 als Strahlformungseinrichtung und eine Abtastplatte 8. Zur automatisierten Montage der Lichtquelle 6 ist diese in eine Fassung 9 einschnappbar, die wiederum am Halter 5 befestigt ist. Anstelle einer Linse 7 kann auch eine Strahlformungseinrichtung in Form eines Linsenarrays oder einer Fresnellinse eingesetzt werden.

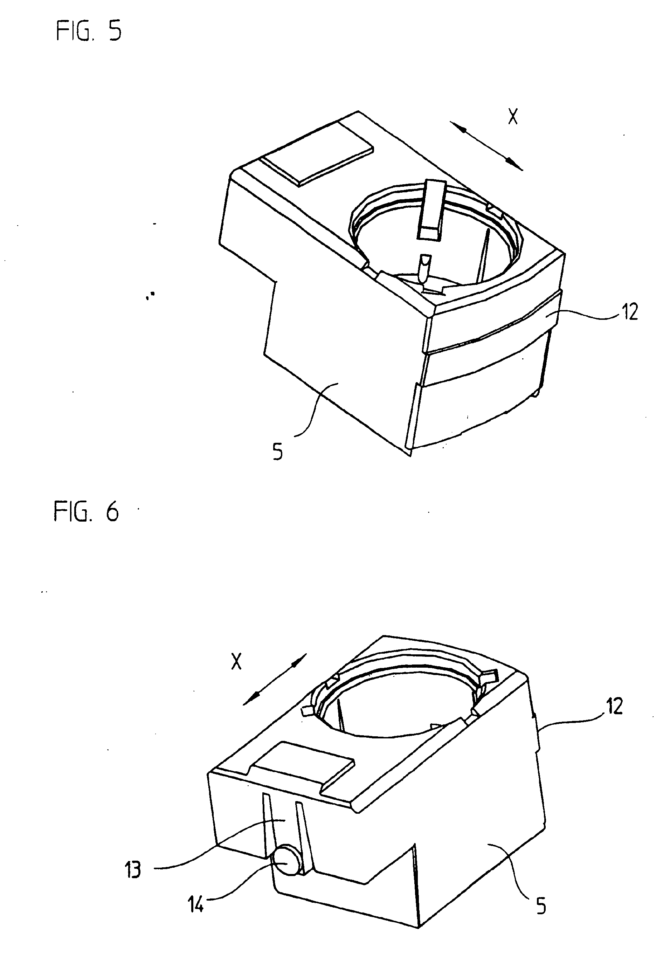

Oberflächen 10, 11 der Ausnehmung 4 bilden eine Führung, an der der Halter 5 in Richtung des Abtastabstandes A - also senkrecht zur Ebene E der abzutastenden Messteilung 101 - gleitend verschiebbar ist. Eine dieser Führungsflächen 10 ist eine Zylinderfläche, die einerseits parallel zur Richtung des Abtastabstandes A verläuft und andererseits kreisbogenförmig gekrümmt ist, wobei die Achse des Kreisbogens parallel in Richtung des Abtastabstandes A verläuft. An dieser Führungsfläche 10 des Trägers 3 liegt eine korrespondierend gekrümmte Oberfläche 12 des Halters 5 an. Diese Oberfläche 12 ist eine konvex gekrümmte Zylinderfläche mit einem Krümmungsradius entsprechend der Führungsfläche 10, wie in Figur 5 vergrößert dargestellt ist.

Zum spielfreien Aneinanderdrängen der Oberfläche 12 des Halters 5 an die Führungsfläche 10 des Trägers 3 ist der gekrümmten zylindrischen Oberfläche 12 gegenüberliegend am Halter 5 ein Federelement 13 angeordnet (Figur 6). Dieses Federelement 13 ist eine am Halter 5 angeformte federnde Zunge mit einem daran angeformten kugelförmigen Vorsprung 14 zur federnden Abstützung an einer weiteren Führungsfläche 11 der Ausnehmung 4 des Trägers 3. Diese weitere Führungsfläche 11 ist eine V- oder U-förmige Rille 11, die in Richtung des Abtastabstandes A verläuft und eine Linearführung für den Vorsprung 14 bildet. Der Vorsprung 14 ist somit ein Führungselement für den Halter 5.

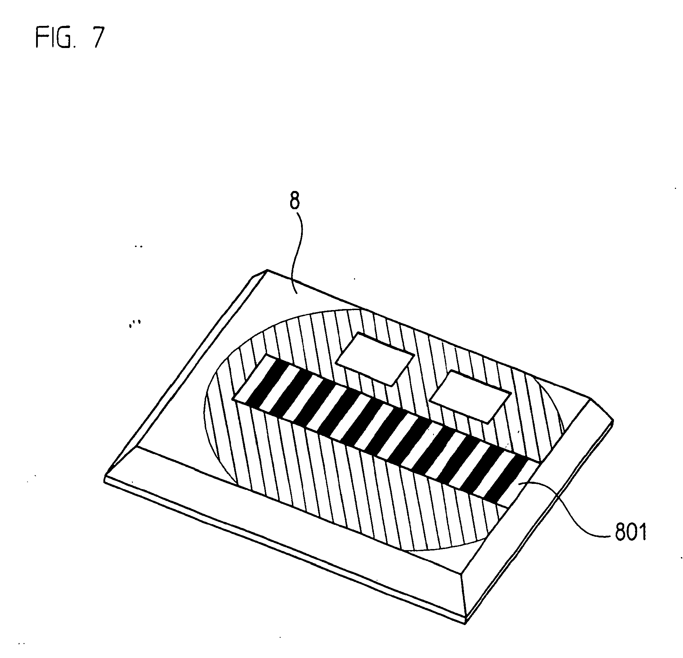

Der Halter 5 ist auch zur Justierung der Winkellage relativ zum Maßstab 1 ausgebildet, indem er in der Ausnehmung allseitig, also um alle drei Drehachsen drehbar ist. Die Justierung des Moiré-Winkels, also die Verdrehung des Halters 5 in einer Ebene parallel zur Ebene E und um eine Drehachse D1 parallel zum Abtastabstand A verlaufend ist im dargestellten Ausführungsbeispiel besonders exakt möglich. Dabei wird die in Figur 7 dargestellte Abtastteilung 801 der Abtastplatte 8 zur Messteilung 101 ausgerichtet. Die Drehachse D1 geht durch den Mittelpunkt des kugelförmigen Vorsprungs 14 und ist von der optischen Achse O der Linse 7 entfernt angeordnet, wodurch eine Untersetzung der Schwenkbewegung erreicht wird. Der Krümmungsradius des Kreisbogens der Führungsfläche 10 des Trägers 3 ist somit größer als der Abstand zwischen der optischen Achse O und dieser Führungsfläche 10. Der Krümmungsradius der Oberfläche 12 entspricht zumindest weitgehend dem Abstand zwischen dem Mittelpunkt des Vorsprungs 14 und der Führungsfläche 10 am Träger 3. Die Oberfläche 12 ist zumindest in der dargestellten Weise gekrümmt, sie kann aber zusätzlich auch in anderen Richtungen gekrümmt sein, insbesondere eine Kugeloberfläche mit einem Radius entsprechend dem Abstand zur Drehachse D1 aufweisen. Abweichungen von diesem Soll-Radius sind aber unkritisch, da durch das Federelement 13 einerseits gewährleistet ist, dass der Vorsprung 14 mit der Rille 11 vorgespannt in Kontakt bleibt und andererseits die gekrümmte Oberfläche 12 mit der Führungsfläche 10 zumindest partiell in Kontakt bleibt.

Der Halter 5 berührt somit in jeder Justierstellung den Träger 3 innerhalb der Ausnehmung 4 an mehreren Punkten 111, 112, 113. Diese Punkte 111, 112, 113 ermöglichen nach erfolgter Justierung eine kräftefreie und trotzdem stabile Festlegung bzw. Fixierung des Halters 5 am Träger 3 durch eine stoffschlüssige Verbindung, insbesondere Löten, Kleben oder durch Verschweißen. Beim Kleben ist gewährleistet, dass keine oder nur geringe Klebespalte entstehen, dies hat den Vorteil, dass das den Klebstoffen innehabende Quellen keine Dejustierung verursachen kann. Das Verschweißen bzw. Verschmelzen ist besonders vorteilhaft einsetzbar insbesondere das Schweißen mit einem Laserstrahl, wenn der Halter 5 und der Träger 3 aus Kunststoff, beispielsweise aus glasfaserverstärktem Polycarbonat bestehen.

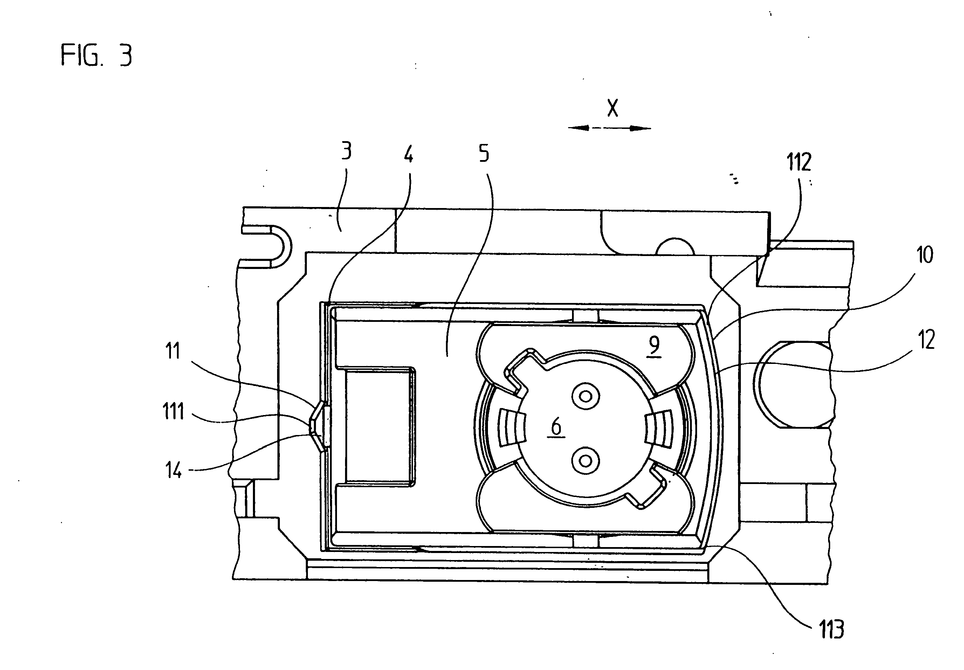

Wie bereits erläutert, berührt der Halter 5 den Träger 3 in der Ausnehmung 4 in jeder Justierstellung an mehreren Punkten 111, 112, 113. Diese Punkte 111, 112, 113 sind vorteilhafterweise über den Umfang der Ausnehmung 4 räumlich verteilt, wie in Figur 3 dargestellt ist. Der Begriff Punkt schließt Linien sowie Flächenbereiche mit ein, so dass die stoffschlüssige Verbindung an voneinander beabstandeten Flächenbereichen 111, 112, 113 erfolgt.

Die erläuterte Justierung des Halters 5 in der Ausnehmung 4 des Trägers 3 erfolgt insbesondere dadurch, dass der Halter 5 Angriffsflächen 90 für ein Justierwerkzeug aufweist, an denen das Werkzeug angreift. Das Justierwerkzeug ist insbesondere ein in Abhängigkeit der momentanen Abtastsignale der Detektoreinheit 15 gesteuerter Manipulator (Roboter), der den Halter 5 an den Angriffsflächen 90 umgreift. Hierzu ragen die Angriffsflächen 90 aus der Ausnehmung 4 des Trägers 3 hervor.

Beim dargestellten Beispiel ist am Träger 3 eine Detektoreinheit 15 befestigt. Diese Detektoreinheit 15 kann eine Leiterplatte mit Photoempfängern sein, sie kann alternativ als strukturiertes Detektorarray ausgebildet sein, wobei das Detektorarray dann gleichzeitig die Abtastplatte bildet. Die Detektoreinheit 15 kann in nicht dargestellter Weise auch am Halter 5 montiert sein.

## Patentansprüche

1. Abtastbaueinheit einer Positionsmesseinrichtung zur lichtelektrischen Abtastung eines Maßstabes (1) in einem festgelegten Abtastabstand A, mit einem Träger (3), an dem ein Halter (5), umfassend
eine Lichtquelle (6),
eine Strahlformungseinrichtung (7) und
eine Abtastplatte (8)
justierbar ist, **dadurch gekennzeichnet, dass**
der Träger (3) eine Ausnehmung (4) mit Führungsflächen (10, 11) aufweist, an welchen der Halter (5) in Richtung des Abtastabstandes A verschiebbar und allseitig drehbar geführt ist, indem der Halter (5) an den Führungsflächen (10, 11) des Trägers (3) an mehreren Punkten (111, 112, 113) anliegt und dass der Halter (5) nach erfolgter Justierung an diesen Punkten (111, 112, 113) am Träger (3) festgelegt ist.

2. Abtastbaueinheit nach Anspruch 1, **dadurch gekennzeichnet, dass** der Halter (5) an diesen Punkten (111, 112, 113) am Träger (3) stoffschlüssig festgelegt ist, insbesondere angeklebt, angeschweißt oder angelötet ist.

3. Abtastbaueinheit nach Anspruch 2, **dadurch gekennzeichnet, dass** der Halter (5) und der Träger (3) aus Kunststoff bestehen und dass der Halter (5) an den genannten Punkten (111, 112, 113) am Träger (3) angeschweißt ist.

4. Abtastbaueinheit nach einem der vorhergehenden Ansprüche, **dadurch gekennzeichnet, dass** der Halter (5) an den Führungsflächen (10, 11) unter Vorspannung anliegt.

5. Abtastbaueinheit nach Anspruch 4, **dadurch gekennzeichnet, dass** diese Vorspannung durch ein am Halter (5) angeordnetes Federelement (13) bewirkt ist.

6. Abtastbaueinheit nach einem der vorhergehenden Ansprüche, **dadurch gekennzeichnet, dass** eine der Führungsflächen (10) einerseits kreisförmig gekrümmt ist, wobei die Achse D1 des Kreisbogens parallel zur Richtung des Abtastabstandes A verläuft und diese Achse eine Drehachse D1 bildet, um welche der Halter (5) drehbar ist.

7. Abtastbaueinheit nach Anspruch 6, **dadurch gekennzeichnet, dass** die Strahlformungseinrichtung eine Linse (7) mit einer optischen Achse (0) ist, und dass der Radius des Kreisbogens der Führungsfläche (10) größer ist als der Abstand zwischen der optischen Achse (0) und der Führungsfläche (10).

8. Abtastbaueinheit nach einem der Ansprüche 6 oder 7, **dadurch gekennzeichnet, dass** die Führungsfläche (10) andererseits parallel zur Richtung des Abtastabstandes A verläuft und somit eine Zylinderfläche bildet.

9. Abtastbaueinheit nach einem der Ansprüche 6 bis 8, **dadurch gekennzeichnet, dass** der Halter (5) eine an der Führungsfläche (10) anliegende Oberfläche (12) aufweist, welche die gleiche kreisbogenförmige Krümmung wie die Führungsfläche (10) besitzt.

10. Abtastbaueinheit nach einem der Ansprüche 6 bis 9, **dadurch gekennzeichnet, dass** eine weitere Führungsfläche (11) des Trägers (3) von einer entlang der Richtung des Abtastabstandes A verlaufenden Rille (11) gebildet ist, in die ein durch das Federelement (13) vorgespanntes Führungselement (14) des Halters (5) eingreift.

11. Abtastbaueinheit nach Anspruch 10, **dadurch gekennzeichnet, dass** das Führungselement (14) eine kugelförmig gekrümmte Oberfläche aufweist, dessen Krümmungsmittelpunkt durch die Drehachse D1 verläuft, um welche der Halter (5) drehbar ist.

## Claims

1. Scanning unit for a position measurement device for the photoelectric
scanning of a scale (1) in a defined scanning space A, with a support (3), on which a holder (5) comprising
a light source (6),
a beam shaping means (7) and
a scanning plate (8)
is adjustable, **characterised in that** the support (3) has a recess (4) with guide faces (10, 11), on which the holder (5) is guided to be displaceable in the direction of the scanning space A and rotatable in all directions as a result of the holder (5) abutting against the guide faces (10, 11) of the support (3) at several points (111, 112, 113), and **in that** the holder (5) is fixed on the support (3) at these points (111, 112, 113) after adjustment has been accomplished.

2. Scanning unit according to Claim 1, **characterised in that** the holder (5) is integrally fixed, in particular glued, welded or soldered, to the support (3) at these points (111, 112, 113).

3. Scanning unit according to Claim 2, **characterised in that** the holder (5) and the support (3) are made of plastic, and **in that** the holder (5) is welded to the support (3) at the specified points (111, 112, 113).

4. Scanning unit according to one of the preceding claims, **characterised in that** the holder (5) abuts against the guide faces (10, 11) under bias.

5. Scanning unit according to Claim 4, **characterised in that** this bias is effected by a spring element (13) arranged on the holder (5).

6. Scanning unit according to one of the preceding claims, **characterised in that** one of the guide faces (10) is curved in the shape of a circle on one side, wherein the axis D l of the arc of the circle runs parallel to the direction of the scanning space A and this axis forms a rotational axis D1, around which the holder (5) is rotatable.

7. Scanning unit according to Claim 6, **characterised in that** the beam shaping means is a lens (7) with an optical axis (O), and **in that** the radius of the arc of the circle of the guide face (10) is greater than the distance between the optical axis (O) and the guide face (10).

8. Scanning unit according to one of Claims 6 or 7, **characterised in that** on the other side the guide face (10) runs parallel to the direction of the scanning space A, and thus forms a cylindrical face.

9. Scanning unit according to one of Claims 6 to 8, **characterised in that** the holder (5) has a surface (12) abutting against the guide face (10), which has the same circular arc-shaped curvature as the guide face (10).

10. Scanning unit according to one of Claims 6 to 9, **characterised in that** a further guide face (11) of the support (3) is formed by a groove (11) running in the direction of the scanning space A, and into said groove a guide element (14) of the holder (5) biased by the spring element (13) engages.

11. Scanning unit according to Claim 10, **characterised in that** the guide element (14) has a spherically curved surface, the centre of curvature of which runs through the rotational axis D1, around which the holder (5) is rotatable.

## Revendications

1. Unité de balayage d'un dispositif de mesure de position pour le balayage photoélectrique d'une règle divisée (1), avec une distance de palpage A définie, comprenant un support (3) sur lequel peut être ajusté un élément de montage (5) comportant
une source lumineuse (6),
un dispositif formateur de faisceau (7) et
une plaque de balayage (8),
**caractérisée en ce que** le support (3) présente un évidement (4) doté de surfaces de guidage (10, 11) sur lesquelles l'élément de montage (5) est guidé avec possibilité de rotation vers tous les côtés et de déplacement dans le sens de la distance de palpage A, grâce au fait que l'élément de montage (5) est en appui en plusieurs points (111, 112, 113) sur les surfaces de guidage (10, 11) du support (3), et **en ce que**, après l'ajustage, l'élément de montage (5) est fixé au support (3) au niveau de ces points (111, 112, 113).

2. Unité de palpage selon la revendication 1, **caractérisée en ce que** l'élément de montage (5) est fixé au support (3), au niveau de ces points (111, 112, 113), par matière, en particulier par collage, soudage ou brasage.

3. Unité de balayage selon la revendication 2, **caractérisée en ce que** l'élément de montage (5) et le support (3) sont réalisés en matière plastique et **en ce que** l'élément de montage (5) est fixé par soudage au support (3), au niveau des points (111, 112, 113) précités.

4. Unité de palpage selon une des revendications précédentes, **caractérisée en ce que** l'élément de montage (5) est appliqué sous précontrainte contre les surfaces de guidage (10, 11).

5. Unité de palpage selon la revendication 4, **caractérisée en ce que** cette précontrainte est générée par un élément élastique (13) disposé sur l'élément de montage (5).

6. Unité de palpage selon une des revendications précédentes, **caractérisée en ce que** l'une des surfaces de guidage (10) présente d'une part une courbure circulaire, l'axe D1 de l'arc de cercle étant parallèle au sens de la distance de palpage A et cet axe constituant un axe de rotation D1 autour duquel peut tourner l'élément de montage (5).

7. Unité de palpage selon la revendication 6, **caractérisée en ce que** l'élément formateur de faisceau est une lentille (7) avec un axe optique (0) et **en ce que** le rayon de l'arc de cercle de la surface de guidage (10) est supérieur à la distance entre l'axe optique (0) et la surface de guidage (10).

8. Unité de palpage selon une des revendications 6 ou 7, **caractérisée en ce que** d'autre part, la surface de guidage (10) est parallèle au sens de la distance de palpage A et forme ainsi une surface cylindrique.

9. Unité de palpage selon une des revendications 6 à 8, **caractérisée en ce que** l'élément de montage (5) présente une surface (12) qui est appliquée contre la surface de guidage (10) et possède la même courbure en arc de cercle que ladite surface de guidage (10).

10. Unité de palpage selon une des revendications 6 à 9, **caractérisée en ce qu'**une autre surface de guidage (11) du support (3) est formée par une rainure (11) qui s'étend dans le sens de la distance de palpage A et dans laquelle s'engage un élément de guidage (14) de l'élément de montage (5) qui est mis sous précontrainte par l'élément élastique (13).

11. Unité de palpage selon la revendication 10, **caractérisée en ce que** l'élément de guidage (14) présente une surface incurvée sous une forme sphérique, dont le centre de courbure passe par l'axe de rotation D1 autour duquel peut tourner l'élément de montage (5).
